# EUROPEAN PATENT SPECIFICATION

(11) **EP 3 263 314 B1**
(45) Date of publication and mention of the grant of the patent: **31.07.2019**
(21) Application number: 17179197.3
(22) Date of filing: 30.06.2017
(51) Int. Cl.: B29C 64/205, B29C 64/153

(54) **LASER 3D PRINTER**
LASER 3D DRUCKER
IMPRIMANTE LASER 3D

(30) Priority: 01.07.2016 IT 201600068832
(43) Date of publication of application: 03.01.2018
(73) Proprietor: 3D4MEC SRL, 40037 Sasso Marconi (IT)
(72) Inventor: CORSINI, Giuseppe, 40037 SASSO MARCONI (IT); CARLONI, Gabriele, 40131 BOLOGNA (IT)
(74) Representative: Manconi, Stefano

(56) References cited:
- WO-A2-98/43762
- US-A1- 2014 265 045
- US-A1- 2014 314 964

## Description

The present invention relates to a laser 3D printer.

In particular, the present invention relates to a laser 3D printer of the type comprising a substantially vertical tubular compartment, which extends downwards starting from an end plane; a lifting platform engaged in a sliding manner in the tubular compartment; a feeding unit for feeding a powdered material onto the lifting platform; and a laser printing head for sintering the powdered material laid on the lifting platform.

The lifting platform is progressively lowered to enable the feeding unit to feed each time a new layer of powdered material onto the lifting platform at the end of each operating cycle of the laser printing head.

Generally, the feeding unit comprises a dispenser for feeding a given amount of powdered material onto the lifting platform and a distributor for distributing the powdered material on the lifting platform itself.

The distributor normally comprises an elongated plate, which is made to advance in a transverse direction to distribute the powdered material over the lifting platform.

Known laser 3D printers of the type described above present some drawbacks mainly resulting from the fact that the powdered material is fed by the dispenser directly and randomly onto the end plane before being distributed by the distributor over the lifting platform. The configuration of the feeding unit hence entails a considerable dispersion of the powdered material in the surrounding environment, consequently with possible contamination of the operating staff. US 2014/0265045 and US 2014/0314964 disclose laser 3D printers comprising a hopper.

The aim of the present invention is to provide a laser 3D printer that will be free from the drawbacks described above and that will be simple and economically advantageous to produce.

According to the present invention a laser 3D printer is provided as specified in the annexed claims.

The present invention will now be described with reference to the annexed drawings, which illustrate a non-limiting example of embodiment thereof and in which:
Figure 1 is a schematic lateral view, with parts in cross-sectional view and parts removed for reasons of clarity, of a preferred embodiment of the laser 3D printer according to the present invention;
Figures 2 and 3 are two schematic lateral views, with parts removed for reasons of clarity, of a first detail of the laser 3D printer of Figure 1 illustrated in two different operative positions;
Figure 4 is a schematic perspective view of a first detail of Figures 2 and 3;
Figure 5 is a schematic plan view, with parts removed for reasons of clarity, of a second detail of Figures 2 and 3;
Figure 6 is a schematic lateral view, with parts removed for reasons of clarity, of a second detail of the laser 3D printer of Figure 1 illustrated in two different operative positions;
Figure 7 is a schematic lateral view, with parts in cross section and parts removed for reasons of clarity, of a detail of Figure 6;
Figure 8 is a schematic perspective view of a third detail of Figures 2 and 3; and
Figure 9 is a schematic perspective view of a fourth detail of Figures 2 and 3.

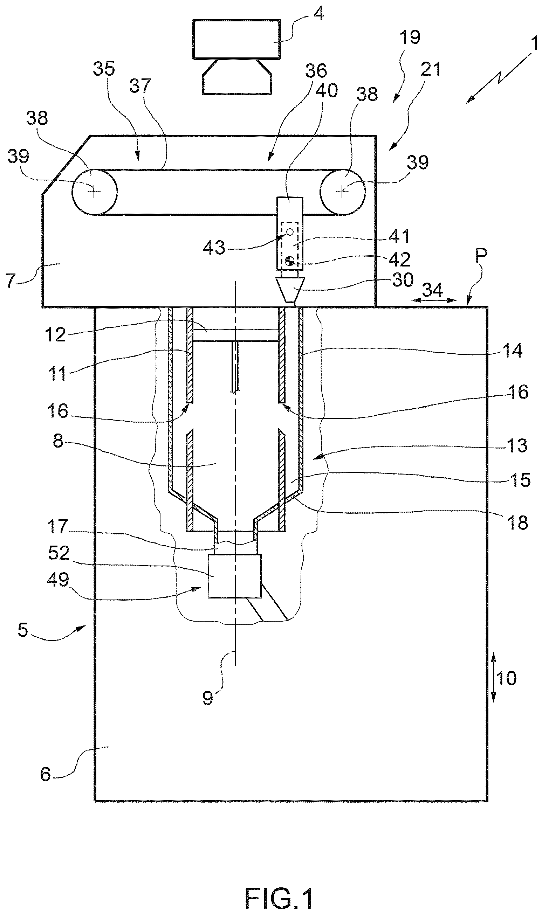

With reference to Figures 1, 2, and 3, designated as a whole by 1 is a laser 3D printer for producing three-dimensional objects 2 by sintering of a powdered material 3 using a laser head 4.

The printer 1 comprises a supporting frame 5, which in turn comprises a bottom box-shaped body 6 and a top box-shaped body 7 connected together along a substantially horizontal plane P of separation.

The body 6 houses within it a tubular compartment 8, which has a longitudinal axis 9 parallel to a substantially vertical direction 10 perpendicular to the plane P, extends downwards starting from the plane P, and has a cross section having a substantially square shape.

The compartment 8 is limited by a side wall 11 engaged in a sliding manner by a lifting platform 12, which extends perpendicular to the direction 10 and is mobile along the compartment 8 in the direction 10 itself under the thrust of a driving device (known and not illustrated).

The platform 12 is connected to a known vibrating device (not illustrated) designed to impart on the platform 12 itself vibrations according to a given law.

The compartment 8 is inserted within a collection chamber 13, which extends downwards starting from the plane P, moreover extends around the wall 11, and is limited by a side wall 14.

The walls 11, 14 define between them an annular channel 15, which communicates with the compartment 8 via a plurality of openings 16, which are made in an intermediate point of the wall 11 and are distributed about the axis 9.

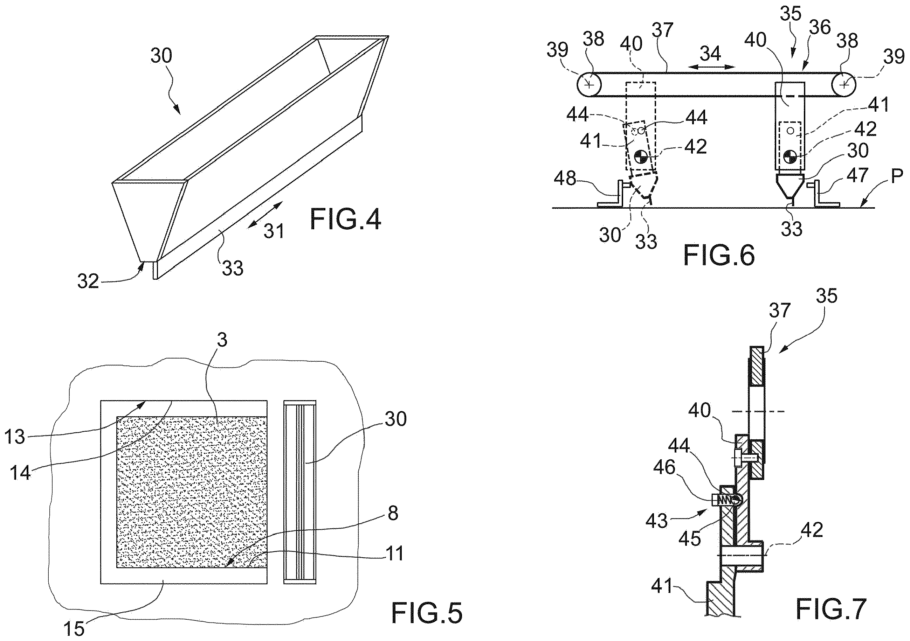

According to what is illustrated in Figure 5, the channel 15 has a substantially U-shaped inlet section, and is closed by the plane P on a fourth side thereof.

The chamber 13 has an outlet 17 for the material 3 from the channel 15 and is limited by a bottom wall 18, which is configured for feeding the material 3 towards the outlet 17 and in particular is inclined downwards.

The printer 1 further comprises a feeding unit 19 for feeding the material 3 onto the platform 12.

The unit 19 comprises a top tank 20 mounted on the body 7, and a dispensing and distribution unit 21 mounted above the plane P and connected to the tank 20 via a vibrating feeding duct 22.

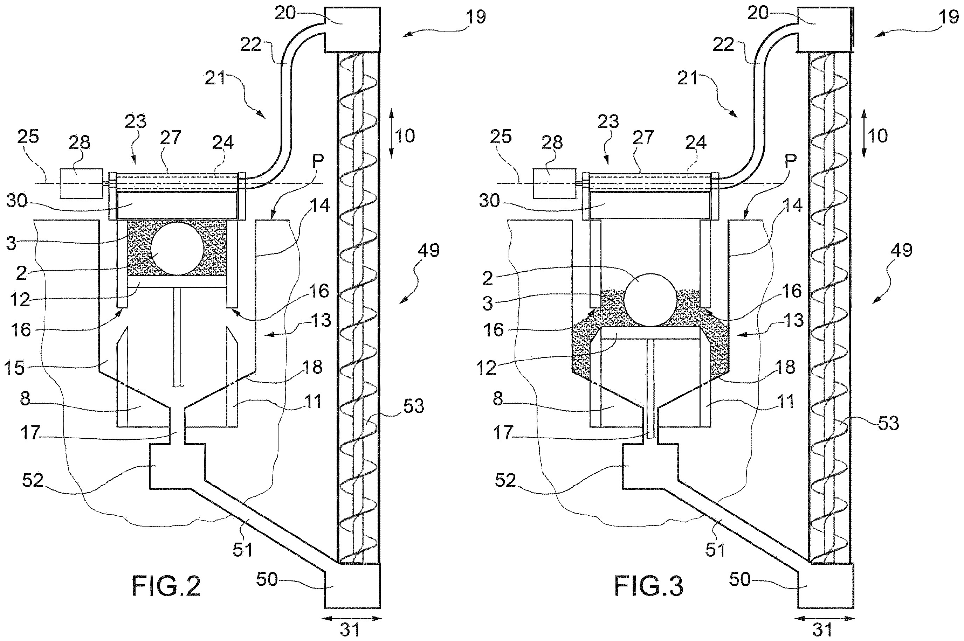

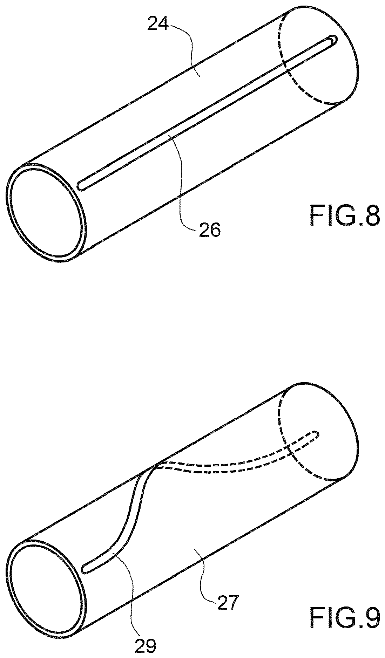

With reference to Figures 2, 3, 8, and 9, the unit 21 comprises a dispensing device 23, in turn comprising a fixed inner pipe 24, which has a longitudinal axis 25 parallel to the plane P and transverse to the direction 10, is coupled in an angularly fixed way to the frame 5, and communicates with the duct 22.

The pipe 24 has a slit 26, which is made through the pipe 24 parallel to the axis 25, and faces the plane P.

The device 23 further comprises a rotating outer pipe 27, which extends around the pipe 24 coaxially thereto about the axis 25 and is coupled in a rotating manner to the pipe 24 for rotating, with respect to the pipe 24 and under the thrust of a driving device 28, about the axis 25 itself.

The pipe 27 has a slit 29, which is made through the pipe 27 and winds in a helix about the axis 25 according to an angle of substantially 180°.

According to what is illustrated in Figures 2, 3, and 4, the unit 21 further comprises a distributor 30, which has the shape of a hopper converging towards the plane P, extends in a direction 31 parallel to the axis 25, and is mounted between the plane P and the dispensing device 23.

The distributor 30 is limited underneath by a plane face 32, and is provided with a spatula 33, which extends in the direction 31, and projects downwards from the face 32 itself.

The distributor 30 is mobile, with respect to the dispensing device 23 and above the compartment 8, in a feeding direction 34 parallel to the plane P and orthogonal to the directions 10 and 31 with a reciprocating rectilinear motion comprising a forward stroke and a return stroke.

In this connection, it should be pointed out that, at the end of the return stroke, the distributor 30 sets itself underneath the dispensing device 23.

The distributor 30 is displaced in the direction 34 by a driving device 35 comprising a belt conveyor 36, in turn comprising a belt 37 wound in a loop about a pair of pulleys 38, one of which is motor-driven in an intermittent way and which are mounted so as to turn about respective rotation axes 39 parallel to one another and to the direction 31.

The device 35 further comprises an engagement plate 40, which is fixed to the belt 37, and carries connected thereto a rocker 41 projecting upwards from the distributor 30.

The rocker 41 is hinged to the plate 40 so as to turn, with respect to the plate 40, about a pivot axis 42 parallel to the direction 31 between a lowered, operating, position (illustrated with a solid line in Figure 6), in which the plane of vertical symmetry of the distributor 30 is perpendicular to the plane P, and a raised, resting, position (illustrated with a dashed line in Figure 6), in which the plane of vertical symmetry of the distributor 30 is inclined with respect to the plane P and the spatula 33 is raised with respect to the plane P itself.

With reference to Figures 6 and 7, the distributor 30 is locked in its operating position and in its resting position by a locking device 43 comprising a pair of slots 44, which are provided in the plate 40 and are circumferentially aligned with respect to one another about the axis 42.

The device 43 further comprises an engagement ball 45, which is mounted in a top arm of the rocker 41 and is displaced into a locking position, in which the ball 45 engages one of the slots 44, and normally kept therein, by a spring 46 set between the rocker 41 and the ball 45 itself.

At the end of the return stroke, the distributor 30 is displaced into its operating position by a first end-of-travel element 47 designed to come into contact with a bottom arm of the rocker 41.

At the end of the forward stroke, the distributor is displaced into its resting position by a second end-of-travel element 48 designed to come into contact with the bottom arm of the rocker 41.

Finally, the printer 1 comprises a device 49 for recycling the material 3 collected in the chamber 13 and fed to the outlet 17.

The device 49 comprises a bottom tank 50 set underneath the outlet 17; a chute 51, which extends between the outlet 17 and the tank 50; a filter 52 mounted at the inlet of the chute 51; and an auger 53 designed to transfer the material 3 from the tank 50 to the tank 20.

Operation of the printer 1 will now be described starting from an instant in which:
the platform 12 is set at a distance from the plane P that is approximately equal to the thickness of a layer of material 3; and
the distributor 30 is set in its operating position underneath the dispensing device 23.

The rotating outer pipe 27 is set in rotation about the axis 25 by the driving device 28 so as to enable the slit 29 to align radially with the slit 26 and define an outlet opening (not illustrated) for the material 3 from the dispensing device 23.

Since the slit 29 winds in a helix about the axis 25 according to an angle of substantially equal to 180°, the aforesaid outlet opening (not illustrated) for exit of the material 3 from the device 23 progressively advances along the axis 25 so as to deposit a homogeneous layer of material 3 within the distributor 30.

At the end of a rotation through 180° of the pipe 27 about the axis 25, the slit 29 disengages the slit 26, and the outlet opening (not illustrated) is closed during the next rotation through 180° of the pipe 27 itself.

Once the material 3 has been fed into the distributor 30, the distributor 30 is displaced above the compartment 8 with its forward stroke in the direction 34 so as to distribute the material 3 over the platform 12.

At the end of its forward stroke, the distributor 30 is first displaced into its resting position by the element 48, and is then displaced above the compartment 8 in its return stroke, without interfering with the material 3.

At the end of the return stroke, the distributor 30 is again displaced into its operating position by the element 47.

The above operating cycle of the dispensing and distribution unit 21 is repeated and combined with lowering of the platform 12 so as to create an object 2.

During production of the object 2, the platform 12 is always set above the openings 16.

Once the object 2 is obtained, the platform 12 is lowered below the openings 16 and set in vibration so as to enable the material 3 to exit from the compartment 8, enter the chamber 13, and proceed towards the outlet 17.

The material 3 is fed from the outlet 17 through the filter 52, along the chute 51, and into the tank 50, and is finally again fed into the tank 20 by the auger 53.

The printer 1 consequently presents the advantage that the material 3 is fed by the dispensing device 23 inside the distributor 30, the hopper-like shape of which enables a reduction in the dispersion of the material 3 in the surrounding environment and the risk of contamination of the operating staff.

## Claims

1. A laser 3D printer comprising a substantially vertical tubular compartment (8), which extends downwards starting from a plane (P) ; a lifting platform (12) engaged in a sliding manner in the tubular compartment (8); a feeding unit (19) mounted above the plane (P) for feeding a powdered material (3) onto the lifting platform (12) ; and a laser printing head (4) for sintering the powdered material (3) laid on the lifting platform (12); the feeding unit (19) comprising a dispenser (23) for feeding a given amount of powdered material (3) onto the lifting platform (12); a distributor (30) for distributing the powdered material (3) over the lifting platform (12) itself, the distributor (30) having the shape of a hopper converging towards the plane (P), and being configured for receiving the powdered material (3) from the dispenser (23); and a driving device (35) for displacing the distributor (30) above the tubular compartment (8) in the plane (P) with a reciprocating rectilinear motion comprising a forward stroke, in which the distributor (30) distributes the powdered material (3) onto the lifting platform (12), and a return stroke; and being **characterized in that** the distributor (30) is connected to the driving device (35) for being displaced, with respect to the driving device (35), between a lowered, operating, position and a raised, resting, position.

2. The laser 3D printer according to Claim 1, wherein the distributor (30) is limited by a bottom face (32), and has a spatula (33) projecting downwards from the bottom face (32) itself.

3. The laser 3D printer according to Claim 1 or 2, wherein the distributor (30) is coupled in a rotating manner to the driving device (35) so as to rotate, with respect to the driving device (35) itself, between said lowered, operating, positions and said raised, resting, position.

4. The laser 3D printer according to any of the preceding claims and further comprising a locking device (43) for locking the distributor (30) in said lowered, operating, position and in said raised, resting, position.

5. The laser 3D printer according to Claim 4, wherein the locking device (43) comprises at least one engagement ball (45) and one spring (46) for displacing the engagement ball (45) into a locking position, and normally keeping it there, wherein the engagement ball (45) engages a slot (44) provided in the driving device (35).

6. The laser 3D printer according to any one of the preceding Claims and further comprising a first end-of-travel device (48) for displacing the distributor (30) into its raised, resting, position at the end of the forward stroke, and a second end-of-travel device (47) for displacing the distributor (30) into its lowered, operating, position at the end of the return stroke.

7. The laser 3D printer according to any one of the preceding claims, wherein the distributor (30) is mounted between the plane (P) and the dispenser (23).

8. The laser 3D printer according to any one of the preceding claims, wherein the distributor (30) has an inlet section for the powdered material (3) larger than an outlet section for the powdered material (3) itself.

## Patentansprüche

1. 3D-Laserdrucker, umfassend ein im Wesentlichen vertikales röhrenförmiges Fach (8), das sich ausgehend von einer Ebene (P) nach unten erstreckt; eine Hebeplattform (12), die auf gleitende Weise in dem rohrförmigen Fach (8) in Eingriff ist; eine über der Ebene (P) montierte Zuführeinheit (19) zum Zuführen eines pulverförmigen Materials (3) auf die Hebeplattform (12); und einen Laserdruckkopf (4) zum Sintern des auf die Hebeplattform (12) gelegten pulverförmigen Materials (3); wobei die Zuführeinheit (19) umfasst: einen Spender (23) zum Zuführen einer gegebenen Menge pulverförmigen Materials (3) auf die Hebeplattform (12); einen Verteiler (30) zum Verteilen des pulverförmigen Materials (3) über der Hebeplattform (12) selbst; wobei der Verteiler (30) die Form eines Trichters aufweist, der in Richtung der Ebene (P) zusammenläuft, und zum Aufnehmen des pulverförmigen Materials (3) von dem Spender (23) konfiguriert ist; und eine Antriebsvorrichtung (35) zum Verlagern des Verteilers (30) über dem rohrförmigen Fach (8) in der Ebene (P) mit einer geradlinigen Hin- und Herbewegung, die einen Vorhub, bei dem der Verteiler (30) das pulverförmige Material (3) auf der Hebeplattform (12) verteilt, und einen Rückhub umfasst; und **dadurch gekennzeichnet, dass** der Verteiler (30) mit der Antriebsvorrichtung (35) verbunden ist, um in Bezug auf die Antriebsvorrichtung (35) zwischen einer abgesenkten Betriebsposition und einer angehobenen Ruheposition verlagert zu werden.

2. 3D-Laserdrucker nach Anspruch 1, wobei der Verteiler (30) durch eine Bodenfläche bzw. Unterseite (32) begrenzt ist und einen Spatel (33) aufweist, der von der Bodenfläche (32) selbst nach unten vorsteht.

3. 3D-Laserdrucker nach Anspruch 1 oder 2, wobei der Verteiler (30) drehbar mit der Antriebsvorrichtung (35) gekoppelt ist, um sich in Bezug auf die Antriebsvorrichtung (35) selbst zwischen den abgesenkten Betriebspositionen und der angehobenen Ruheposition zu drehen.

4. 3D-Laserdrucker nach einem der vorhergehenden Ansprüche und ferner umfassend eine Verriegelungsvorrichtung (43) zum Verriegeln des Verteilers (30) in der abgesenkten Betriebsposition und in der angehobenen Ruheposition.

5. 3D-Laserdrucker nach Anspruch 4, wobei die Verriegelungsvorrichtung (43) zumindest eine Eingriffskugel (45) und eine Feder (46) umfasst, um die Eingriffskugel (45) in eine Verriegelungsposition zu verlagern und diese normal dort zu halten, wobei die Eingriffskugel (45) in einen Schlitz (44) eingreift, der in der Antriebsvorrichtung (35) bereitgestellt ist.

6. 3D-Laserdrucker nach einem der vorhergehenden Ansprüche und ferner umfassend eine erste Bewegungsendvorrichtung (48) zum Verlagern des Verteilers (30) in seine angehobene Ruheposition am Ende des Vorhubs und eine zweite Bewegungsendvorrichtung (47) zum Verlagern des Verteilers (30) in seine abgesenkte Betriebsposition am Ende des Rückhubs.

7. 3D-Laserdrucker nach einem der vorhergehenden Ansprüche, wobei der Verteiler (30) zwischen der Ebene (P) und dem Spender (23) montiert ist.

8. 3D-Laserdrucker nach einem der vorhergehenden Ansprüche, wobei der Verteiler (30) einen Einlassabschnitt für das pulverförmige Material (3) aufweist, der größer ist als ein Auslassabschnitt für das pulverförmige Material (3) selbst.

## Revendications

1. Imprimante laser 3D comprenant un compartiment tubulaire sensiblement vertical (8), lequel s'étend vers le bas depuis un plan (P) ; une plateforme de levage (12) engagée de manière coulissante dans le compartiment tubulaire (8) ; une unité d'alimentation (19) montée au-dessus du plan (P) destinée à fournir un matériau en poudre (3) sur la plateforme de levage (12) ; et une tête d'impression laser (4) destinée à fritter le matériau en poudre (3) déposé sur la plateforme de levage (12) ; l'unité d'alimentation (19) comprenant un dispositif d'approvisionnement (23) destiné à délivrer une quantité donnée de matériau en poudre (3) sur la plateforme de levage (12) ; un distributeur (30) destiné à distribuer le matériau en poudre (3) sur la plateforme de levage (12) proprement dite, le distributeur (30) ayant la forme d'une trémie convergeant vers le plan (P), et étant configuré pour recevoir le matériau en poudre (3) du dispositif d'approvisionnement (23) ; et un dispositif d'entraînement (35) destiné à déplacer le distributeur (30) au-dessus du compartiment tubulaire (8) dans le plan (P) avec un mouvement rectiligne de va-et-vient comprenant une course vers l'avant, dans le cadre de laquelle le distributeur (30) distribue le matériau en poudre (3) sur la plateforme de levage (12), et une course de retour ; et étant **caractérisée en ce que** le distributeur (30) est relié au dispositif d'entraînement (35) afin d'être déplacé, par rapport au dispositif d'entraînement (35), entre une position de fonctionnement abaissée et une position de repos relevée.

2. Imprimante laser 3D selon la revendication 1, dans laquelle le distributeur (30) est délimité par une face inférieure (32), et présente une spatule (33) faisant saillie vers le bas depuis la face inférieure (32) proprement dite.

3. Imprimante laser 3D selon la revendication 1 ou 2, dans laquelle le distributeur (30) est couplé de manière rotative au dispositif d'entraînement (35) de sorte à tourner, par rapport au dispositif d'entraînement (35) proprement dit, entre ladite position de fonctionnement abaissée et ladite position de repos relevée.

4. Imprimante laser 3D selon l'une quelconque des revendications précédentes et comprenant en outre un dispositif de verrouillage (43) destiné à verrouiller le distributeur (30) dans ladite position de fonctionnement abaissée et dans ladite position de repos relevée.

5. Imprimante laser 3D selon la revendication 4, dans laquelle le dispositif de verrouillage (43) comprend au moins une bille d'engagement (45) et un ressort (46) destiné à déplacer la bille d'engagement (45) dans une position de verrouillage, et normalement à la maintenir dans cette position, dans laquelle la bille d'engagement (45) s'engage dans une fente (44) ménagée dans le dispositif d'entraînement (35).

6. Imprimante laser 3D selon l'une quelconque des revendications précédentes et comprenant en outre un premier dispositif de fin de course (48) destiné à déplacer le distributeur (30) dans sa position de repos relevée à la fin de la course vers l'avant, et un deuxième dispositif de fin de course (47) destiné à déplacer le distributeur (30) dans sa position de fonctionnement abaissée à la fin de la course de retour.

7. Imprimante laser 3D selon l'une quelconque des revendications précédentes, dans laquelle le distributeur (30) est monté entre le plan (P) et le dispositif d'approvisionnement (23).

8. Imprimante laser 3D selon l'une quelconque des revendications précédentes, dans laquelle le distributeur (30) présente une section d'entrée destinée au matériau en poudre (3) plus large qu'une section de sortie elle-même destinée au matériau en poudre (3).
